# Europäisches Patentamt

# European Patent Office

# Office européen des brevets

(19)

(11) Veröffentlichungsnummer: **0 142 844**
**B1**

(12) **EUROPÄISCHE PATENTSCHRIFT**

(45) Veröffentlichungstag der Patentschrift:
**04.10.89**

(21) Anmeldenummer: **84113948.8**

(22) Anmeldetag: **17.11.84**

(51) Int. Cl.⁴: **B 60 B  21/12,** B 60 C  17/04

(54) **Luftreifen-Fahrzeugrad mit einer Notlaufstütze.**

(30) Priorität: **21.11.83  DE 3341969**

(43) Veröffentlichungstag der Anmeldung:
**29.05.85 Patentblatt 85/22**

(45) Bekanntmachung des Hinweises auf die Patenterteilung:
**04.10.89 Patentblatt 89/40**

(84) Benannte Vertragsstaaten:
**AT BE CH DE FR GB IT LI LU NL SE**

(56) Entgegenhaltungen:
**EP-A-0 100 013**
**EP-A-0 140 074**
**DE-A-2 437 773**
**US-A-2 097 748**
**US-A-2 844 180**
**US-A-3 426 821**
**US-A-3 961 728**

(73) Patentinhaber: **UNIROYAL ENGLEBERT Reifen GmbH, Hüttenstrasse 7, D-5100 Aachen (DE)**

(72) Erfinder: **Poque, Dionysius Joseph, Dipl. Ing., Meischenfeld 17, D-5100 Aachen (DE)**
Erfinder: **Zinnen, Norbert, Dipl. Ing., Auf Vogelsang 24, D-5100 Aachen (DE)**

EP 0 142 844 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

### Beschreibung

Die Erfindung bezieht sich auf ein Luftreifen-Fahrzeugrad, das im wesentlichen aus einer zum Zwecke des Ein- und Ausbaues des Luftreifens nicht teilbar ausgebildeten, einer insoweit einteiligen Radfelge und aus einem Luftreifen in Standardausbildung besteht, und die Radfelge zusätzlich eine Notlaufstütze aufweist.

Der Standard-Luftreifen wird gebildet aus einer Karkasse, insbesondere einer Radialkarkasse, mit zwei im Seitenabstand zueinander angeordneten, zugfeste Wulstkerne enthaltenden Reifenwülsten, daran sich anschließenden Seitenwänden und einem zentralen Laufstreifen, insbesondere einem gürtelverstärkten, Laufprofil aufweisenden Laufstreifen.

Die Radfelge wird gebildet aus zwei im Seitenabstand zueinander angeordneten Felgenschultern, die axial innen geneigt verlaufen und durch ein vertieftes Felgenbett miteinander verbunden sind und axial außen in je einen Felgenrand oder ein Felgenhorn übergehen. Hierbei handelt es sich um eine Standardfelge mit üblichen genormten Abmessungen.

In dem vertieften Felgenbett ist zusätzlich eine Notlaufstütze angeordnet, die aus einem Fußteil und einem Reifenstützteil besteht. Der Fußteil ist mit der Radfelge fest verbunden und zum Zwecke des Reifenein- und Ausbaues nicht lösbar angeordnet. Der Reifenstützteil wird von einer (im Querschnitt betrachtet) bevorzugt pilzförmigen radialen Verlängerung des Fußteils gebildet. Er ragt um ein bestimmtes, wählbares Naß über das Felgenhorn radial hinaus. Er dient im Notlauffall als lasttragendes Element und ist, zur bestmöglichen Reifenabstützung und um Schäden am luftleeren Reifen zu vermeiden, so breit wie möglich auszubilden.

Bei derartigen Fahrzeugrädern werden die Reifenwülste von den Felgenhörnern auf der Radfelge gehalten, damit diese nicht seitlich von der Radfelge abrutschen können. Des weiteren kann mindestens eine Felgenschulter mit einem Sicherheitsbuckelrand (Hump) versehen sein, der den Reifenwulst daran hindert, daß er von der Felgenschulter in das Tiefbett abrutschen kann. Diese Radfelge ist z. B. nach ETRTO Norm Rims, Seiten R11 - R13 bekannt.

Das Tiefbett ist ein bewährtes Hilfsmittel, um den Ein- und Ausbau des Luftreifens zu erleichtern.

Die bekannten Fahrzeugräder, deren Radfelge mit einer Notlaufstütze versehen sind, die im Notlauffall den Luftreifen stützen, weisen in mehrfacher Hinsicht wesentliche Nachteile auf.

Zum einen kann ein Felgentiefbett seine Funktion als Ein- und Ausbauhilfe für den Luftreifen dann nicht erfüllen, wenn das Tiefbett im wesentlichen von der Notlaufstütze ausgefüllt wird. Dies ist gleichzusetzen mit einem fehlenden Tiefbett, durch das die Reifenmontage sehr erschwert bis unmöglich ist.

Zum anderen sind bekannte Notlaufstützen aus Gründen der günstigen Reifenmontage mit einer verhältnismäßig schmalen Reifenstützfläche ausgestattet. Ein solches Reifenrad ist nach US-A-2 097 748 bekannt. Der luftleere Luftreifen wird sehr unvollkommen abgestürzt und die Gefahr, daß die gewölbten Seitenwände bei Notlauf Bodenkontakt haben und auf Grund hoher Reibung zerstört werden, ist hierdurch sehr groß.

Bekannte Notlaufstützen mit breiter Stützfläche behindern wiederum die Reifenmontage, weil dazu der erforderliche Freiraum fehlt. Das nach US-A-2 844 180 bekannte und dem Gattungsbegriff entsprechende Luftreifenrad ist mit einer radial großen und axial breiten Notlaufstütze versehen. Die Felge weist zum günstigen Reifenmontieren ein verhältnismäßig tiefes Felgenbett auf.

Die Notlaufstütze ist auf Grund ihrer Ausbildung und Anordnung geeignet, Last im Notfall aufzunehmen. Sie wird jedoch dem häufig auftretenden, unter Umständen sehr gefährlichen Betriebszustand des Luftreifens nicht gerecht, der durch häufigen geringen Druckluftverlust entsteht. Dies kann z. B. bei häufigen Kurvenfahrten mit überhöhter Geschwindigkeit, höherer Diffusion oder durch Sitzungenauigkeit als Folgeursache durch Auffahren auf Bordsteinkanten oder ähnlichen Einwirkungen der Fall sein.

Bei den sich dabei auf Dauer einstellenden Minderluftdrücken besteht die Gefahr, daß der Luftreifen von der Radfelge abspringt. Dabei überwindet der Reifenwulst durch Seitenkrafteinwirkung von außen zunächst den inneren Sicherheitsrand der Felgenschulter. Der Reifenwulst bewegt sich danach in das tiefe Felgenbett. Dadurch erhält der radial entgegengesetzt vorliegende Teil des Reifenwulstes einen Freiheitsgrad, durch den er ohne Hinderung über das Felgenhorn bewegt wird und von der Felge abspringt. Dies ist stets mit einer hohen Unfallgefahr durch das außer Kontrolle geratende Fahrzeug verbunden. Dieser Betriebszustand ist deshalb so gefährlich, weil er durch mangelnde regelmäßige Überprüfung des Reifenluftdruckes seitens des Fahrzeugfahrers nicht erkannt wird.

Hier ist ein geeignetes einfaches Mittel erforderlich, das den Betriebszustand des Abspringens des Luftreifens von der Radfelge zuverlässig verhindert.

Ziel der Erfindung ist es, sowohl den luftarmen als auch den luftleeren Luftreifen sicher zu halten und zu stützen, das Abrutschen von der Radfelge zu verhindern und einen bestmöglichen Notlauf zu gewährleisten, ohne daß der Reifen oder die Felge dabei zerstört werden.

Der Ein- und Ausbau des Luftreifens soll mit Hilfe einer zu diesem Zweck nicht teilbaren Radfelge, ähnlich wie bei Standardfelgen ohne Notlaufstütze erleichtert, ermöglicht werden, ohne daß dabei auf eine verhältnismäßig breite Stützfläche an der Notlaufstütze verzichtet und ohne daß ein vertieftes Felgenbett beibehalten wird.

Die technische Aufgabe der Erfindung besteht darin, das Luftreifen-Fahrzeugrad mit Notlaufstütze nach der eingangs beschriebenen Gattung so weiter auszubilden, daß die Notlaufstütze zusätzlich zur Notlauftragfähigkeit auch zum Sichern gegen Abwurf der Reifenwülste von der Radfelge und zusätzlich zum Aufnehmen der Reifenwülste beim Ein- und Ausbau sowie Notlauf des Luftreifens ausgebildet und einfach und günstig der Radfelge zugeordnet werden soll, wobei ein erleichterter Ein- und Ausbau sowie eine zuverlässige Notlaufabstützung des Luftreifens durch Beibehalten einer möglichst breiten Stützfläche der Notlaufstütze gewährleistet sein sollen.

Erfindungsgemäß wird diese Aufgabe durch die Merkmale des Anspruchs 1 gelöst.

Auf einfache Weise werden somit günstig sowohl ein Durchlaß als auch ein Freiraum für den Reifenwulst geschaffen, die einen erleichterten Ein- und Ausbau und eine angemessene Bewegungsfreiheit des Luftreifens ermöglichen. Bei Betriebszustand des Luftreifens mit Minderluftdruck bildet die radial innere Fläche an der Notlaufstütze eine Art Anlauffläche, durch deren Widerstand verhindert wird, daß der luftarme Luftreifen von der Radfelge abspringen kann. Bei größerem Druckluftverlust kann der Reifenwulst zwar durch die gebildete Engstelle zwischen Felgenschulter und Notlaufstütze in Richtung auf den freien Ringraum ausweichen. Er wird jedoch bei der Rückbewegung durch den Durchlaß auch in diesem Fall daran gehindert, von der Radfelge abzuspringen. Bei luftleerem Luftreifen wird der Reifenwulst entweder im Durchlaß oder im freien Ringraum mit genügender Bewegungsfreiheit aufgenommen, so daß der zentrale Reifenteil günstig breit und sicher von der Notlaufstützfläche getragen wird, ohne daß Teile des Reifens oder der Felge bei Notlauf mit ausreichender Notlaufgeschwindigkeit auf und ausreichender Fahrstrecke Schaden nehmen.

Die Kombination der Merkmale der möglichst breiten Notlaufstütze mit radial innerer Fläche als Anlaufwiderstand, des zusammen mit der im wählbaren Abstand vorliegenden Felgenschulter gebildeten Durchlasses und des zusammen mit dem vertieften Felgenbett gebildeten freien Ringraumes schaffen ein Fahrzeugrad, das als Sicherheitsrad dient, das den luftarmen die den luftleeren Luftreifen gleichermaßen zuverlässig auf der Radfelge hält und stützt, das wie ein übliches Fahrzeugrad, bestehend aus Reifen und Felge nach Standard, trotz der Notlaufstütze günstig und einfach im Aufbau, ohne Schwierigkeiten zu handhaben und verhältnismäßig kostengünstig ist.

Bevorzugt befindet sich die Durchlaß mitbildende Fläche an einer bestimmten, jedoch wählbaren Stelle der Innenkontur der Notlaufstütze, die Punkt einer Kurve ist, die etwa parallel zu einer gedachten Linie zwischen dem Innenrand der Felgenschulter bzw. Innenkontur des Sicherheitsbuckelrandes (Hump) und dem Felgenhorn verläuft und die des weiteren nach radial außen etwa parallel zu der Reifenaußenkontur verläuft. Auf diese Weise kann abhängig von der Reifen- und Felgengröße die günstigste Innenfläche ausgebildet werden.

Die Innenfläche kann eine geradlinig begrenzte, insbesondere konische Fläche, sie kann aber auch eine bogenlinig begrenzte, insbesondere im Bereich des seitlichen Randes der Notlaufstütze gerundete Fläche sein. Die große Breite der Notlaufstütze begünstigt die Lage der Anlauffläche als Widerstandsfläche gegen Abwurf.

Form und Lage der Fläche richten sich nach Größe und Form der Notlaufstütze. Für PKW-Felgen kann sie unterschiedlich zu LKW- bzw. Motorradfelgen sein. Bevorzugt sind Anlauffläche und Ringraum beidseitig an der Notlaufstütze ausgebildet.

Die neuen Ausbildungen der Fläche und des Ringraumes an der Notlaufstütze haben Einfluß auf die radiale Vertiefung des Felgenbettes. Diese kann eine Höhe von nur dem 0,3-fachen der Höhe eines Standardtiefbettes aufweisen und erfüllt dennoch zuverlässig die Funktionen der Montagevertiefung wie auch der sicheren Wulstaufnahme bei Notlauf. Die Tiefe des Felgenbettes darf nicht größer sein als die jeweils vorhandene Höhe des Felgenhornes. In diesem Falle könnte unter ungünstigen Bedingungen ein Reifenabwurf möglich sein.

Bevorzugt ist der Querschnitt der im wesentlichen ringartigen Notlaufstutze pilzformig oder T-förmig ausgebildet. Sie kann integriertes Teil einer einteiligen Radfelge oder getrenntes Bauteil sein, das fest mit der Radfelge verbindbar ist. Ein solches Bauteil kann nachträglich auf Radfelgen mit Tiefbett übernommen werden. Wesentliche Voraussetzungen sind breite Stützfläche, Anlaufflächenkontur radial innen und schmale, jedoch ausreichende Fußteilbreite der Notlaufstütze, die sich zum Verbinden mit der Tiefbettfelge eignet.

Die Notlaufstütze kann aus metallischen oder zumindest teilweise metallischen Werkstoffen gebildet sein. Es können jedoch auch formfeste, beanspruchungssichere Nichtmetalle, wie z. B. Kunststoffe oder Kunstharze, eingesetzt werden. Zur verbesserten Luftvolumenausnutzung des Reifens kann eine hohl ausgebildete Notlaufstütze mit Durchbrüchen versehen sein. Dies hat auch Vorteile hinsichtlich eines geringen Gewichtes.

Die Notlaufstütze kann, wie es an sich bekannt ist, mit einem besonderen Stützflächenbelag versehen oder der Stützteil aus einem solchen gebildet sein. Neu ist, daß die Notlaufstütze wahlweise mit einem hohe oder niedrige Reibung erzeugenden Werkstoff versehen sein kann. Das richtet sich danach, ob es sich um ein Fahrzeugrad an der getriebenen oder nichtgetriebenen Achse handelt. Wenn die Reifenwülste eines luftleeren Reifens bei Notlauf in das Tiefbett ausweichen sollen, so daß geringe Relativbewegungen zwischen Reifen und Notlaufmantel, z. B. bei einem Antriebsrad, gewünscht werden, so besteht die Kontaktfläche aus Material hoher Reibung.

Wenn die Reifenwülste auf Felgenschultern mit einem sogenannten Sicherheitsbuckelrand (Hump) solange wie möglich gehalten werden sollen, also Betriebszustand eines luftarmen Reifens vorliegt, so daß Quer- und Umfangskräfte durch die Reifenwülste zu übertragen sind, so kann die Kontaktfläche der Notlaufstütze mit Material geringer Reibung belegt sein oder ein solches, wie z. B. geeignetes Gleitmittel, auf ihr oder auf der Reifeninnenfläche aufgetragen sein. Für den Fall gewünschter Schmierung kann ein Schmiermittelbehälter bevorzugt in der hohl ausgebildeten Notlaufstütze günstig angeordnet werden.

Die Notlaufstütze ist an der radial äußeren Stützfläche bevorzugt so breit wie möglich, etwa so breit wie das vertiefte Felgenbett ausgebildet. In weiteren Fällen kann sie auch axial verbreitert, bevorzugt bis zur 1,5-fachen Breite des Tiefbettes verbreitert vorliegen. Die radiale Höhe der Notlaufstütze übertrifft das Felgenhorn mindestens um Reifenseitenwanddicke. Sie kann radial bis zur 0,7-fachen Reifenhöhe betragen, abzüglich der Felgenhornhöhe. Bevorzugt weist sie jedoch eine weniger große Höhe auf. Dies ist von der Reifengröße abhängig.

Weitere Erfindungsmerkmale und Einzelheiten des Luftreifen-Fahrzeugrades sind in der Zeichnung dargestellt und an Hand von Ausführungsbeispielen erläutert.

Es zeigt

Fig. 1 ein Luftreifen-Fahrzeugrad mit Notlaufstütze im Querschnitt,

Fig. 2 eine Prinzipskizze eines Fahrzeugrades mit Radfelge, Notlaufstütze und Reifenwülsten im Querschnitt,

Fig. 3 eine Schema-Skizze eines Radfelgenteils und Kurvenpunkte für die Lage einer inneren Notlaufstützenfläche,

Fig. 4 einen Teilquerschnitt durch eine Radfelge mit Notlaufstütze in einteiliger Bauweise,

Fig. 5 einen Teilquerschnitt durch eine Radfelge mit abgewandelter Notlaufstütze in Verbundbauweise,

Fig. 6 einen Teilquerschnitt durch eine Sicherheitsradfelge mit seitlich offener Notlaufstütze,

Fig. 7 einen Teilquerschnitt durch eine Sicherheitsradfelge mit Notlaufstütze in Blockringbauart,

Fig. 8 einen Teilquerschnitt durch eine weitere Sicherheitsradfelge mit abgewandelter Notlaufstütze in T-Querschnitt,

Fig. 9 einen Teilquerschnitt durch eine weitere Sicherheitsradfelge mit weiter abgewandelter Notlaufstütze und seitlicher Verlängerung,

Fig. 10 a - c verschiedene Reifenwülste mit unterschiedlichen Wulstneigungen und verschiedene Radfelgen in schematischen Ausschnitten.

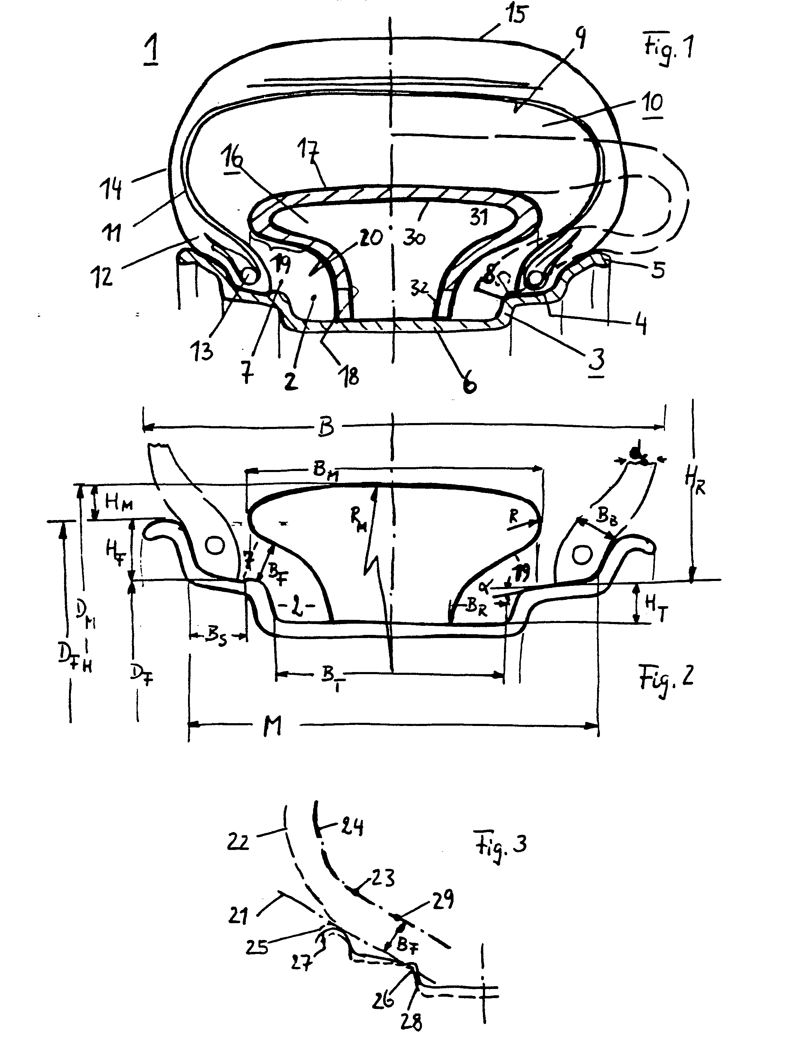

Das Luftreifen-Fahrzeugrad 1 gemäß Fig. 1 besteht im wesentlichen aus einer einteiligen Radfelge 3 und einem Luftreifen 10 und ist zusätzlich mit einer Notlaufstütze 16 ausgestattet. Es besteht aus einer üblichen, genormten Radfelge und einem üblichen Luftreifen. Es wird montiert, indem die Radfelge quer in den Luftreifen eingebracht wird.

Die Radfelge besteht im wesentlichen aus den beiden Felgenschultern 4 und den jeweiligen Felgenhörnern 5 sowie einem zentralen, radial vertieften Felgenbett 6. Dieses Felgenbett kann übliche genormte Abmessungen aufweisen, es kann jedoch eine radial geringere Bettiefe als das genormte Felgenbett ausweisen. Es kann auch breiter ausgeführt werden im Vergleich zum genormten Felgenbett. Die Radfelge 3 ist aufgrund ihrer Ausbildung in der Lage, die Notlaufstütze 16 in sich aufzunehmen. Beide Elemente können zu einer einteiligen oder festen, nur für den Grundaufbau geteilten Baueinheit vereinigt werden.

Der Luftreifen 10 besteht aus einer Karkasse 11, insbesondere bei Bauart eines Gürtelradialreifens aus einer Radialkarkasse, den beiden Reifenwülsten 12 mit jeweils einen zugfesten Wulstkernring 13, den beiden Seitenwänden 14 und einem Laufstreifen 15, insbesondere bei einem Gürtelreifen durch eine Gürtelkonstruktion verstärkten Laufstreifen.

Die Notlaufstütze 16 besteht im wesentlichen aus einem Trägerteil, dem sogenannten Stützmantel 17, auf den sich bei einem Notlauf die Reifeninnenfläche 9 des luftleeren Luftreifens 10 aufstützt, und dem Standfuß 18 oder Ständerteil, mit dem die Notlaufstütze im Bereich des vertieften Felgenbettes 6 mit der Radfelge verbunden ist oder mit ihr eine Baueinheit bildet.

Die Notlaufstütze 16 weist des weiteren eine radial innen angeordnete, der Felgenschulter 4 zugekehrte Fläche 19 auf. Sie bildet mit der Felgenschulter 4, gegebenenfalls auch mit einem Teil des Felgenhorns eine begrenzte Engstelle mit der lichten Weite $B_F$, den Durchlaß 7; vgl. dazu auch Fig. 2.

Diese Weite ist etwas größer bemessen als die breiteste Stelle $B_B$ des Reifenwulstes. Die Weite beträgt bevorzugt die 1,1- bis 2-fache Breite $B_B$ des Reifenwulstes 12 an der breitesten Stelle.

Die Fläche 19 ist als Teil der geschaffenen Engstelle zum einen eine Art Führungsfläche für die erleichterte Reifenmontage mit Hilfe des Tiefbettes. Sie ist zum anderen ihrer Funktion nach eine Art Anlauffläche bei kritischer Fahrbetriebssituation im Falle des luftarm gewordenen Luftreifens. Sie verhindert, daß ein Reifenwulst von seinem Sitz auf der Felgenschulter abgeworfen wird. Derartige Betriebszustände ergeben sich, wenn Kurven mit erhöhter Fahrgeschwindigkeit durchfahren werden. Ein luftarmer Luftreifen ist besonders gefährlich, weil er vom Fahrer nahezu unbemerkt bleibt. Durch die neu geschaffene Anlauffläche 19 wird der Reifenwulst daran gehindert, bei einer solchen kritischen Situation von der Radfelge abzuspringen. Die weitere Funktion der Fläche 19 ist die einer Sperre gegen Abwurfbewegung des Reifenwulstes bei Notlauf auf der der Kontaktfläche gegenüberliegenden Stelle. Im Falle einer Reifenpanne, wenn der Luftreifen luftleer geworden ist, bewegen sich die Reifenwülste in den neu geschaffenen Ringraum 2, der zwischen Fußstütze 18 der Notlaufstütze und dem Felgenbett 6 der Radfelge gebildet ist. Dieser Ringraum 2, an beiden Seiten im Felgenbett ausgebildet, weist eine Form und Größe auf, die ihn in die Lage versetzen, den Reifenwulst 12 bei Notlauf insgesamt aufzunehmen. Die Fläche 19 bildet bei der Notlaufbewegung dann eine Art von Widerstand, die den Reifenwulst des Teils des Reifens ohne Bodenkontakt daran hindert, von der Radfelge abzuspringen.

Die Notlaufstütze ist im Querschnitt bevorzugt pilz- oder T-förmig ausgebildet. Ihre Stützfläche 17 ist im wesentlichen so breit wie die Breite des Felgenbettes. Die Stützflächenbreite kann konstruktiv so breit wie möglich ausgeführt werden. Dadurch ist eine günstige breite Stützfläche bei einem eventuellen Notlauffall gewährleistet. Die leichte Reifenmontierbarkeit ist wegen des frei zugänglichen Tiefbettringraums voll gewährleistet.

Durch die neu ausgebildete Fläche 19 an der Notlaufstütze 16 und den freien Ringraum 2 wird das Felgenbett funktionell derart unterteilt, daß es nach wie vor für die erleichterte Reifenmontage zur Verfügung steht, im Notlauffall die Reifenwülste zum Zwecke günstiger Relativbewegungen zwischen Reifen und Felge bei Notlauf aufnehmen kann und daß es die breitestmögliche Stützflächengestaltung zuläßt. Außerdem ist gewährleistet, daß selbst bei extremen Kurvenfahrten der Reifenwulst bei Minderluftdruck nicht von der Radfelge abspringen kann.

Das Fahrzeugrad 1 weist eine Radfelge 3 auf, die in den genormten bzw. standardisierten Ausführungen für PKW mit B-, C-, J-, TR-, TD-, DL-Horn und schwach geneigter Felgenschulter oder mit stärker geneigter Steilschulter für LKW oder Zweiradfahrzeuge angewandt werden kann. Das Tiefbett kann symmetrisch oder asymmetrisch angeordnet sein. Die Felge kann mit oder ohne Sicherheitsrand (Hump) versehen sein. Die Felgenschulter kann auch eine von der Norm abweichende Neigung aufweisen.

Der Prinzipskizze gemäß Fig. 2 sind weitere Einzelheiten zu entnehmen. Die Reifenhöhe $H_R$, gemessen von der Felgenschulter 4 bis zu der größten radialen Erstreckung des Laufstreifens 15, und Reifenbreite B, gemessen an der Stelle der Seitenwände 14 breitester axialer Erstreckung, sind wichtige Baumaße so wie die Maulbreite M der Radfelge 3, gemessen an der Stelle der breitesten axialen Erstreckung der beiden Felgenschultern 4. Das Reifenquerschnittsverhältnis Reifenhöhe $H_R$ zu Reifenquerschnitt kann für Normalquerschnitt- oder Niederquerschnittreifen vorliegen.

Die Höhe des Felgenhorns 5 ist mit $H_F$ bezeichnet, der Durchmesser ist mit $D_{FH}$ bezeichnet; die Felgenschulter 4 ist in der axialen Erstreckung mit $B_S$ und im Durchmesser mit $D_F$ und die Neigung der Felgenschulter 4 ist zur Achsparallelen mit Winkel $\alpha$ bezeichnet. Er kann 5° oder 15°, er kann auch 4° bis 16° betragen. Die Höhe des radial vertieften Felgenbettes 6 ist mit $H_T$ und die Breite ist mit $B_T$ bezeichnet.

Die Breite der Notlaufstütze 16 ist mit $B_M$, der Durchmesser ist mit $D_M$, der Radius der gewölbten Stützfläche ist mit $R_M$ und der Radius der seitlichen Rundung ist mit R bezeichnet. Die radiale Höhe der Notlaufstütze, über das Felgenhorn gemessen, ist mit $H_M$ bezeichnet. Für die Anordnung und Ausbildung der Notlaufstütze und Zuordnung zur Radfelge sind folgende Bau- und Konstruktionsgrößen von Bedeutung.

Die Reifenwulstbreite $B_B$ ist gleich oder kleiner als Felgenschulterbreite $B_S$ einer Radfelge ohne Sicherheitsrand (Hump).

Die Notlaufstützenbreite $B_M$ beträgt etwa der 1,0- bis 1,5-fachen Breite des Felgenbettes 6; sie kann in einigen Fällen die 0,75-fache Breite aufweisen.

Der radiale Überstand $H_M$ der Notlaufstütze über Felgenhorn beträgt im Minimum Dicke bzw. doppelte Dicke einer Reifenseitenwand d und kann bis zur 0,7-fachen Reifenhöhe $H_R$ betragen. Der Krümmungsradius $R_M$ für die Stützfläche beträgt etwa 1,0- bis 15-fache Maulbreite M.

Die Höhe $H_T$ des Felgenbettes beträgt 0,3- bis 1,0-fache Höhe $H_F$ des genormten Felgenhorns 5.

Der Abstand $B_F$ zwischen der radial innen ausgebildeten Fläche 19 an der Notlaufstütze und der Felgenschulter 4, insbesondere an dessen Innenrand ohne Sicherheitsrand (Hump), der mit 8 bezeichnet ist, beträgt das 1,1- bis 2,0-fache der Reifenwulstdicke $B_B$.

Das Tiefbett ist nicht tiefer als das Felgenhorn hoch ist. Es soll dadurch verhindert werden, daß der Reifen bei einem Notlauf über das Felgenhorn abgeworfen wird, wenn auf der gegenüberliegenden Reifenseite voller Bodenkontakt vorliegt.

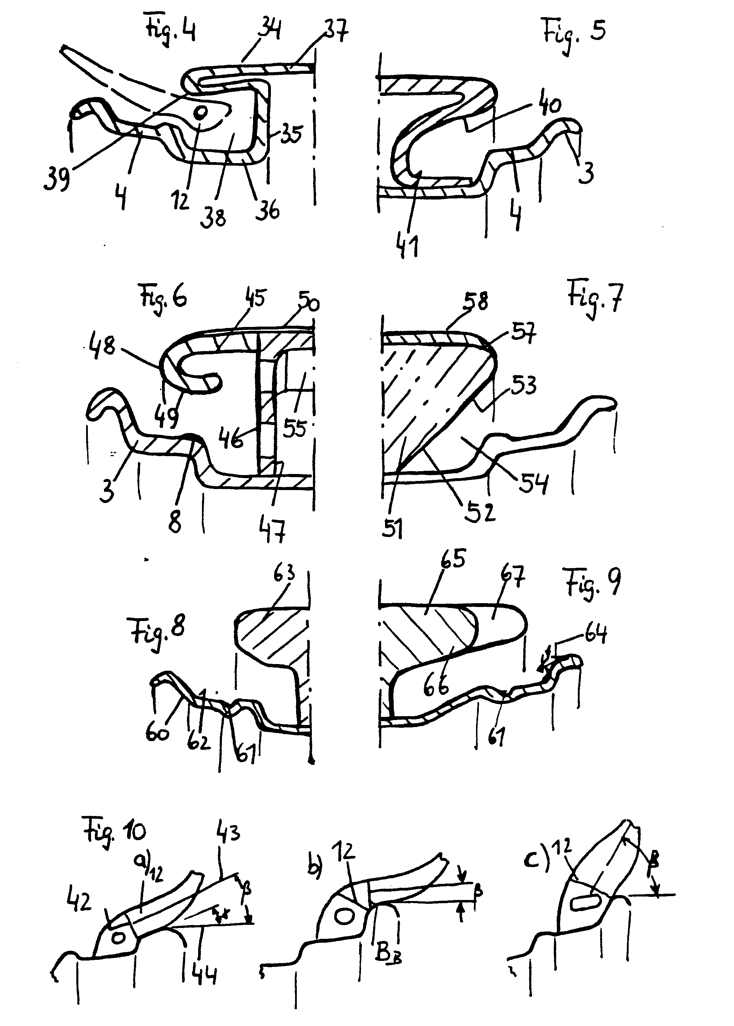

Die Lage der radial inneren Fläche 19 ist abhängig von der Größe des Reifens und der Felge und kann an einer bestimmten, jedoch wählbaren Steile der Innenkontur 20 festgelegt werden. Wie an Hand von Fig. 3 erläutert, wird hier eine gedachte Bezugslinie 21 zugrundegelegt.

Es ist die Tangente an Felgenhorn 25 und Schulterrand 26 einer Felge mit einer schwach geneigten Schulter bzw. an Felgenhorn 27 und Schulterrand 28 einer Felge mit einer stark geneigten Schulter. Diese gedachte Bezugslinie setzt sich nach radial außen oberhalb des Felgenhorns in einer gedachten Bezugslinie 22 fort, die im wesentlichen der Reifenwulst/Seitenwand-Außenkontur entspricht.

Parallel zu diesen Bezugslinien 21, 22 erhält man Bezugslinien 23, 24. Auf diesen befinden sich Kurvenpunkte 29, die im Abstand $B_F$ zur Felgenschulter bzw. zum Felgenhorn bzw. den Linien 21, 22 angeordnet sind. Eine von diesen kann die Steile für die Innenfläche 19 sein. Mit grösserer Reifendimension kann der Abstand zwischen Linie 22 und 24 etwas kleiner sein als $B_F$. Es muß letztendlich ein freier Durchgang für den Reifenwulst durch die Engstelle zwischen Fläche 19 und Felgenschulter 4 gewährleistet sein.

Der Ringraum 2, der sich radial und axial nach innen - von der Fläche 19 aus betrachtet - erstreckt, liegt in einer Größe und Form vor, die mindestens etwas größer ist als ein Reifenwulst.

Die Breite $B_R$ des Ringraumes ist etwa 1,5-fach breiter als der Reifenwulst 12 in der Breite $B_B$.

In der radialen Tiefe erstreckt sich der Ringraum 2 bis auf das Felgenbett 6. Axial begrenzt wird der Ringraum von der Innenkontur des Steges oder Fußes 18 der Notlaufstütze und der Seitenwand bzw. Rand 7 am Übergang von Felgenschulter 4 zum Tiefbett 6.

In Fig. 1 ist ferner schematisch ein luftleerer Reifen in Notlaufbetriebsstellung (gestrichelt) dargestellt, wobei sich der Reifenwulst im Ringraum 2 befindet, die Seitenwand seitlich ausgebaucht ist und der übrige Reifenteil auf der Stützfläche 17 aufliegt.

Die Fläche 19 verhindert hierbei ein Auswandern des Reifenwulstes 12 aus dem Tiefbett an der (nicht dargestellten) gegenüberliegenden Seite. Die Gestaltung der Fläche 19 kann geradlinig oder bogenförmig sein. Die Fläche 19 in der Ausführung nach Fig. 1 besteht aus aneinander anschließenden Bögen, die an den Stoßstellen durch Radien aneinander angepaßt sind.

Die Notlaufstütze gemäß Fig. 1 besteht ferner im wesentlichen aus einem ringförmigen Hohlkörper 30 mit Wänden 31 aus Metall oder Nichtmetall, die geeignet sind, Last im Notlauf zu tragen.

Durch Durchbrüche 32 in den Wänden 31 kann Luft auch in den Innenraum des Hohlkörpers einströmen. Durch (nicht dargestellte) Ausnehmungen und Querstege ist der Hohlkörper 30 fest mit dem Felgenbett 6 verbunden. Es kann auch eine gegossene, geschweißte, verschraubte, gebördelte, genietete o.ä. Ausführung sein.

Der Luftreifen 10 wird montiert, indem die Radfelge 6 quer in den Luftreifen hineinbewegt wird, wobei der Reifenwulst 12 an der entsprechenden Reifenseite auf der Stützfläche 17 der Notlaufstütze 16 aufliegt und die Radfelge weiter in das Reifeninnere gelangt. Hier wird die Radfelge um die Längsachse des Reifens um 90° gedreht und erhält seine richtige Einbaustellung. In dieser Stellung werden mit Hilfe des Durchlasses und des Ringraumes an der Notlaufstütze die Reifenwülste auf die entsprechenden Felgenschultern aufgezogen.

Gemäß Fig. 4 ist eine Ausführungsform in einteiliger Bauweise dargestellt. Das Felgenbett 36 geht über in eine radiale Stegwand 35, die an der radial äußeren Stelle mit einer seitlich auskragenden, auf sich selbst zurückgebogenen Mantelwand 34 sowohl einstückig verbunden als auch als Hohlkörper geschlossen ist. An ihr sind die Stützfläche 37 und die Führungsfläche 39 gebildet. Durch die Steg/Dachausführung ist zugleich oberhalb des Tiefbettes ein freier Ringraum 38 belassen.

Gemäß Fig. 5 ist eine ähnliche weitere Ausführungsform gezeigt. Bei dieser ist der Ringsteg 40 in gebogener Form im radial unteren Bereich in einen Querstegring 41 übergehend ausgebildet. Er dient als Befestigungsfuß mit der vorhandenen Tiefbettfelge. Durch die Steghöhe wird ein tiefes Felgenbett in der Höhe reduziert. Ein solcher Stützkörper ist nachträglich in vorhandene Radfelgen ohne Schwierigkeiten einzubauen. Bei den beiden Ausführungen gemäß Fig. 4 und 5 ist die Fläche 39 bzw. 40 bogenförmig, einmal konkav, einmal konvex ausgebildet. Der (strichliert) dargestellte Reifenwulst 12 des (nicht dargestellten) Reifens zeigt eine Einbaustellung.

Die weitere Ausführungsform gemäß Fig. 6 zeigt eine offene Bauweise einer Notlaufstütze 45. Sie besteht aus einem hohlen Ringkörper 46 mit durchbrochenen Stegen 47, an den seitlich auskragende Tragflächen 48 befestigt sind. Die Tragflächen sind nach innen gekrempt ausgebildet. Die dabei entstehende Wulst dient der Versteifung. An ihr ist auch die Fläche 49 ausgebildet, die mit der Felgenschulter die Engstelle $B_F$ bildet. Der seitliche Abstand der Stege 47 zur Tiefbettseitenwand ist so gewählt, daß ein genügend großer Ringraum zur Aufnahme des Reifenwulstes verbleibt und andererseits der formfesten Gestaltung der Notlaufstütze 45 Rechnung getragen wird.

Die Radfelge ist mit einem Sicherheitsrand 8 (Hump) ausgestattet, der als Mittel zum Verhindern der Axialbewegung des Reifenwulstes bekannt ist. Er verhindert zunächst ein Ausweichen des Reifenwulstes in das Tiefbett. In diesem Fall dient die Fläche 49 als Anlauffläche des Reifens bei gemindertem Luftdruck. Durch den Reifen mit derartig gesicherten Reifenwülsten können Quer- und Umfangskräfte übertragen werden, wenn ein Notlauf bevorsteht oder eintritt. Zur Verbesserung der dann gewünschten geringen Reibung zwischen Reifeninnenfläche 9 und Oberfläche der Tragfläche 48 kann ein Gleitmittel 50 für diese Kontaktfläche vorgesehen sein. Es kann auch ein Antireibebelag angeordnet werden. Diese Maßnahme kann erwogen werden, wenn es sich um ein nicht angetriebenes, ein mitlaufendes Fahrzeugrad handelt. Das Reibung mindernde Mittel kann auch an der Innenfläche 9 des Reifens vorliegen.

Mit 55 ist ein möglich anzuordnender Schmiermittelbehälter angedeutet.

Das Fahrzeugrad gemäß Fig. 7 zeigt eine andere Ausführungsform. Der Grundkörper besteht aus einem Leichtbaumaterial, z. B. aus Kunststoff oder aus durch Metallkord oder Glasfaser verstärktem Kunststoff o.a. Material. Hierbei ist die Engstellenfläche 53 an der Kontur 52 ausgebildet. In der Verlängerung derselben ist auch eine Fläche als Teil des Ringraumes 54 ausgebildet.

Diese Notlaufstütze weist in der Kontaktfläche 57 ein Material bzw. einen Materialbelag 58 o. dgl. auf, der für die Erzeugung hoher Reibungswerte geeignet ist. Das ist für den Betriebsfall gedacht, wenn geringe Relativbewegungen zwischen der Kontaktfläche 57 und der inneren Oberfläche 9 des Reifens gewünscht sind. Bei einem eventuellen Notlauf, wenn die Reifenwülste in das Felgentiefbett ausweichen, werden an der Kontaktstelle zwischen Reifen und Notlaufstütze geringe Reibungswerte vorliegen. Um in diesem Falle auch ausreichend große Quer- und Umfangskräfte zu übertragen und die Last, die aufliegt, tragen zu können, kann ein Material mit hohem Reibungswert vorgesehen sein. Dies kann z. B. erwogen werden bei einem Antriebsrad, bei dem auch unter Notlaufbedingungen eine Mindestfahrstrecke ohne zerstörenden Einfluß mit ausreichender Mindestfahrgeschwindigkeit zurückgelegt werden soll.

Die Ausführungsform gemäß Fig. 8 zeigt eine genormte DL Radfelge 60, bei der zusätzlich eine Sicherheitsrille 61 in der Felgenschulter 62 ausgebildet ist. Der (nicht dargestellte) Luftreifen ist an seinem Reifenwulst mit einer zur Rille 61 korrespondierenden, ringartigen Wulstzehe versehen. Die Notlaufstütze 63 ist im Querschnitt T-förmig ausgebildet. Die Konturen sind im wesentlichen geradlinig. Die Flächenübergänge sind gerundet ausgebildet.

Die Ausführungsform gemäß Fig. 9 zeigt eine genormte TD Radfelge mit unter Winkel $\gamma$ geneigtem konischen Felgenhorn 64 und einer zusätzlichen Sicherheitsrille 61. Die Notlaufstütze 65 ist hierbei im Querschnitt ebenfalls T-förmig ausgebildet. Die Standardausführung mit Rand 66 kann im Bedarfsfall axial um ein zusätzliches Element 67 erweitert werden. Derartige Notlaufkörper können Voll- oder Hohlkörper aus Metall oder Nichtmetall oder Kombinationsformen aus beiden Werkstoffen sein.

In Fig. 10a bis 10c sind drei unterschiedlich geneigte Reifenwülste 12 dargestellt. Der Reifenwulst nach Fig. 10a liegt auf einem konischen Felgenhorn, ähnlich Horn 64 in Fig. 9, auf. An der dicken Reifenwulststelle 42 ist die Mittel senkrechte 43 errichtet. Zwischen ihr und der Achsparallelen 44 ist der Winkel $\beta$ der Wulstneigung angegeben. $\beta$ beträgt 30°. Die $T_R$ Hornneigung ist mit $\gamma$ bezeichnet.

Der Reifenwulst in Fig. 10b weist eine Mittelsenkrechte auf, die mit der Achsparallelen einen sehr kleinen Winkel $\beta$ bildet; er kann 3° bis 0° betragen. Die Felgenschulter ist schwach geneigt, das Felgenhorn hat Normmaß B. Der Reifenwulst in Fig. 10c weist eine Mittelsenkrechte auf, die im Winkel $\beta$ etwa 60° beträgt. Dieser Wulst ist auf einer Steilschulterfelge angeordnet.

Je nach Reifenart und -größe können die Winkel $\beta$ zwischen 0° und 60° betragen und mit verschiedenen Felgen kombiniert werden. Hierdurch ist eine mehr oder weniger starke Neigung der Seitenwand zur Anbindung an den Wulst möglich. Es ist ferner möglich, bei Sonderbauarten Radfelgen zu verwenden, die Felgenschultern mit jeweils unterschiedlichen Felgendurchmessern aufweisen. An solche Radfelgen sind die Reifen mit unterschiedlichen Reifenwulstdurchmessern angepaßt.

Aufgrund der Anordnung und Ausbildung der Notlaufstütze kann das Tiefbett als Montagehilfe beibehalten und dennoch eine breite Stützfläche an der Notlaufstütze vorgesehen werden. Bei extremen Kurvenfahrten wie auch bei Notlaufsituationen wird der Reifenwulst durch eine Anlauffläche oder Sperre an einer Engstelle zwischen Notlaufstütze und Felgenschulter daran gehindert, von der Radfelge abzuspringen.

**Patentansprüche**

1. Luftreifen-Fahrzeugrad (1), bestehend aus einer nicht teilbaren Radfelge (3) mit Notlaufstütze (16) und einem Luftreifen (10), bei dem der Luftreifen aus einer Karkasse (11), insbesondere Radialkarkasse, mit zwei im Seitenabstand zueinander angeordneten, zugfeste Wulstkerne (13) enthaltenden Reifenwülsten (12), daran sich anschließenden Seitenwänden und einem Laufstreifen (15), insbesondere gürtelverstärkten Laufstreifen, besteht, und bei dem die Radfelge (3) zwei im Seitenabstand zueinander angeordnete, axial innen geneigt ausgebildete Felgenschultern (4) aufweist, die durch ein radial vertieftes Felgenbett (6) verbunden sind und axial außen in je ein Felgenhorn (5) übergehen, und wobei die Notlaufstütze (16) mit ihrer Stützfläche (17) eine Breite ($B_M$) aufweist, die mindestens der Breite ($B_T$) des Felgenbetts (6) entspricht, wobei die Notlaufstütze (16), deren Außendurchmesser (DM) größer ist als die Summe aus Felgenhorndurchmesser ($D_{FH}$) und doppelter Dicke (d) der Reifenseitenwand (14), im Felgenbett (6) durch ein Fußteil (18) mit diesem verbunden ist und bei der das Fußteil eine Wand (20) mit einer Kontur aufweist, durch die mit dem Felgenbett ein Ringraum (2) gebildet ist, wobei die Wand (20) eine ringförmige Fläche (19) aufweist, die mit der Felgenschulter (4) und mit dem Felgenhorn (5) einen Durchlaß (7) mit einer Engstelle bildet, deren lichte Weite ($B_F$) das 1,1- bis 2-fache der Reifenwulstdicke ($B_B$) beträgt, dadurch gekennzeichnet, daß der Ringraum (2) sich bis zum Felgenbett (6) axial nach innen zu einer Breite ($B_R$) von 1,5-facher Reifenwulstdicke ($B_B$) erweitert und daß die Vertiefung ($H_T$) des Felgenbettes (6) gegenüber der Felgenschulter (4) der 0,3- bis 1-fachen Höhe der Standardfelgentiefbetthöhe und höchstens der Höhe ($H_F$) des Felgenhorns (5) entspricht.

2. Luftreifen-Fahrzeugrad nach Anspruch 1 dadurch gekennzeichnet, daß die radial innere Fläche (19) an einer bestimmten, jedoch wählbaren Stelle der Innenkontur (20) ausgebildet ist, die Punkt (29) einer Kurve (23, 24) ist, die parallel zu einer gedachten Linie (21, 22) zwischen dem inneren Rand (26) der Felgenschulter (4) und dem Felgenhorn (5) verläuft und die radial höher parallel zu einer gedachten Linie (22) entsprechend der Reifenaußenkontur verläuft.

3. Luftreifen-Fahrzeugrad nach Anspruch 1 und 2, dadurch gekennzeichnet, daß die radial innere Fläche (19) und der Ringraum (2) beidseitig an der Notlaufstütze vorliegen.

4. Luftreifen-Fahrzeugrad nach Anspruch 1 bis 3, dadurch gekennzeichnet, daß die radial innere Fläche (19) eine geradlinig begrenzte Fläche ist.

5. Luftreifen-Fahrzeugrad nach Anspruch 1 bis 3, dadurch gekennzeichnet, daß die radial innere Fläche (19) konisch ausgebildet ist.

6. Luftreifen-Fahrzeugrad nach Anspruch 1 bis 3, dadurch gekennzeichnet, daß die radial innere Fläche (19) eine bogenlinig begrenzte Fläche ist.

7. Luftreifen-Fahrzeugrad nach Anspruch 1 bis 6, dadurch gekennzeichnet, daß die radial innere Fläche Teil des seitlichen Randes (39, 49) der Notlaufstütze ist.

8. Luftreifen-Fahrzeugrad nach Anspruch 1 bis 7, dadurch gekennzeichnet, daß der Ringraum (2) im Querschnitt gesehen die Form eines Reifenwulstes aufweist.

9. Luftreifen-Fahrzeugrad nach Anspruch 1 bis 8, dadurch gekennzeichnet, daß das vertiefte Felgenbett und die zugeordnete Notlaufstütze symmetrisch vorliegen.

10. Luftreifen-Fahrzeugrad nach Anspruch 1 bis 8, dadurch gekennzeichnet, daß das vertiefte Felgenbett und die zugeordnete Notlaufstütze asymmetrisch vorliegen.

11. Luftreifen-Fahrzeugrad nach Anspruch 1 bis 10, dadurch gekennzeichnet, daß die Stützflächenbreite ($B_M$) bis zur 1,5-fachen Breite ($B_T$) des Tiefbettes (6) beträgt.

12. Luftreifen Fahrzeugrad nach einem der vorhergehenden Ansprüche, dadurch gekennzeichnet, daß der Querschnitt der Notlaufstütze pilzförmig ausgebildet ist.

13. Luftreifen-Fahrzeugrad nach einem der vorhergehenden Ansprüche, dadurch gekennzeichnet, daß die Notlaufstütze als Hohlkörper ausgebildet ist.

14. Luftreifen-Fahrzeugrad nach einem der vorhergehenden Ansprüche, dadurch gekennzeichnet, daß der Hohlkörper mit Wanddurchbrüchen (32) versehen ist und Ausnehmungen für Befestigungsmittel aufweist.

15. Luftreifen-Fahrzeugrad nach einem der Ansprüche 1 bis 11, dadurch gekennzeichnet, daß der Querschnitt der Notlaufstütze T-förmig ausgebildet ist.

16. Luftreifen-Fahrzeugrad nach einem der vorhergehenden Ansprüche, dadurch gekennzeichnet, daß Radfelge und Notlaufstütze eine Baueinheit bilden.

17. Luftreifen-Fahrzeugrad nach einem der vorhergehenden Ansprüche, dadurch gekennzeichnet, daß die Notlaufstütze nachträglich in Tiefbettfelgen einbaubar ist.

18. Luftreifen-Fahrzeugrad nach einem der vorhergehenden Ansprüche, dadurch gekennzeichnet, daß Radfelge und Notlaufstütze einen einstückigen Felgenradkörper bilden.

19. Luftreifen-Fahrzeugrad nach Anspruch 1 bis 18, dadurch gekennzeichnet, daß die Neigung ($\alpha$) der Felgenschulter (4) im Bereich von 4° bis zu 16° vorliegt.

20. Luftreifen-Fahrzeugrad nach einem der vorhergehenden Ansprüche, dadurch gekennzeichnet, daß Radfelgen mit genormten oder nach Anspruch 19 ausgebildeten Felgenschultern (4) und genormten Felgenhörnern und darauf montierbaren Luftreifen mit entsprechenden Reifenwülsten verwendbar sind und daß die Reifenwülste (12) eine Neigung ($\beta$) aufweisen, bei der die Mittel senkrechte (43), errichtet auf einer Reifenwulststelle (42), zu der Achsparallelen (44) im Bereich von 0° bis 60° geneigt ist.

21. Luftreifen-Fahrzeugrad nach Anspruch 1 bis 20, dadurch gekennzeichnet, daß die Stützfläche (17) der Notlaufstütze konkav gewölbt ist.

22. Luftreifen-Fahrzeugrad nach Anspruch 1 bis 21, dadurch gekennzeichnet, daß die Notlaufstütze im Bereich der Stützfläche (17) mit einem hohe Reibung erzeugenden Werkstoff versehen ist.

23. Luftreifen-Fahrzeugrad nach Anspruch 1 bis 22, dadurch gekennzeichnet, daß die Felgenschulter einen an sich bekannten Sicherheitsrand (Hump 8) aufweist.

24. Luftreifen-Fahrzeugrad nach Anspruch 1 bis 24 und 25, dadurch gekennzeichnet, daß die Notlaufstütze im Bereich der Stützfläche mit einem geringe Reibung erzeugenden Werkstoff versehen ist.

25. Luftreifen-Fahrzeugrad nach Anspruch 1 bis 21, 23 und 24, dessen Notlaufkontaktfläche mit Schmiermittel versehen ist, gekennzeichnet durch die Verwendung mindestens eines Schmiermittelbehälters in bzw. an der Notlaufstütze.

26. Luftreifen-Fahrzeugrad nach einem der vorhergehenden Ansprüche, dadurch gekennzeichnet, daß die Felgenschulter (4) eine an sich bekannte Sicherheitsrille (61) und der Reifen eine damit korrespondierende Wulstzehe aufweist.

27. Luftreifen-Fahrzeugrad nach einem der vorhergehenden Ansprüche mit schmalem Tiefbett, dadurch gekennzeichnet, daß die Notlaufstütze (65) axial erweitert ausgebildet ist, wobei die Stützflächenbreite ($B_M$) durch zusätzliche Elemente (67) erweiterbar ist.

28. Luftreifen-Fahrzeugrad nach einem der vorhergehenden Ansprüche, dadurch gekennzeichnet, daß die Radfelge (3) Felgenschultern (4) mit unterschiedlichen Felgendurchmessern (DF) aufweist und der Luftreifen entsprechend angepaßte Reifenwülste aufweist.

**Claims**

1. Vehicle wheel (1) with tyre, made of a nondividable rim (3) with an emergency running support (16) and a tyre (10), wherein the tyre comprises a casing (11), in particular a radial casing, provided with two tyre beads (12) laterally spaced apart from each other and comprising tension-resistant bead wires (13), with walls which are contiguous to the beads and with a tread (15), in particular with a tread reinforced with a belt, and wherein the wheel rim (3) comprises two shoulders (4) laterally spaced apart form each other and axially shaped in an inwardly slanted manner, these shoulders being connected by a radially grooved rim base (6), each of said shoulders axially converting outwardly into a rim bead (5), the emergency running support (16) having at its bearing surface (17) a width $(B_M)$ which at least corresponds to the width $(B_T)$ of the rim base (6), this emergency running support (16) the outside diameter of which is larger than the sum of the rim bead diameter $(D_M)$ of which is larger than the sum of the rim bead diameter $(D_{FH})$ and of the doubled thickness (d) of the wall (14) of the tyre, being connected inside the rim base (6) with the latter by a foot-acting element (18), this element comprising a wall (20) having an outline by which an annular space (2) is formed with the rim base, the wall (20) presenting a toroidal surface (19) which forms with the rim shoulder (4) and the rim bead (5), a passage (7) comprising a narrow location the internal width $(B_F)$ of which is 1.1 to 2 times the thickness $(B_B)$ of the tyre bead, characterized in that the annular space (2) widens till the rim base (6) axially and inwardly, up to a width of 1.5 times the thickness $(B_B)$ of the tyre bead, and in that the cavity $(H_T)$ of the rim base (6), measured with respect to the rim shoulder (4) corresponds to a height which is comprised between 0.3 and 1 times the standard height of the base and at the maximum to the height $(H_F)$ of the rim bead (5).

2. Vehicle wheel with tyre according to claim 1, characterized in that the radially internal surface (19) is formed at a determined location but which may be selected of the internal outline (20), which is a point (29) of a curve (23, 24) which passes in a parallel direction to an imaginary line (21, 22) between the internal edge (26) of the rim shoulder (4) and the rim bead (5), and which radially passes higher than and in a parallel direction to an imaginary line (22) corresponding to the external outline of the tyre.

3. Vehicle wheel with tyre according to either of claims 1 and 2, characterized in that the radially internal surface (19) and the annular space (2) are located on both sides of the emergency running support.

4. Vehicle wheel with tyre according to any of claims 1 to 3, characterized in that the radially internal surface (19) consists of a surface with a rectilinear outline.

5. Vehicle wheel with tyre according to any of claims 1 to 3, characterized in that the radially internal surface (19) is conically-shaped.

6. Vehicle wheel with tyre according to any of claims 1 to 3, characterized in that the radially internal surface (19) consists of a surface with a curved outline.

7. Vehicle wheel with tyre according to any of claims 1 to 6, characterized in that the radially internal surface is a portion of the lateral edge (39, 49) of the emergency running support.

8. Vehicle wheel with tyre according to any of claims 1 to 7, characterized in that the annular space (2) has in cross-section the shape of a tyre bead.

9. Vehicle wheel with tyre according to any of claims 1 to 8, characterized in that the grooved rim base and the joining emergency running support are symetrically located.

10. Vehicle wheel with tyre according to any of claims 1 to 8, characterized in that grooved rim base and the joining emergency running support are asymetrically located.

11. Vehicle wheel with tyre according to any of claims 1 to 10, characterized in that the width of the bearing surface $(B_M)$ raises to 1.5 times the width $(B_T)$ of the grooved base (6).

12. Vehicle wheel with tyre according to any of the preceding claims, characterized in that the cross-section of the emergency running support is mushroom-shaped.

13. Vehicle wheel with tyre according to any of preceding claims, characterized in that the emergency running support is shaped as a hollow body.

14. Vehicle wheel with tyre according to any of the preceding claims, characterized in that the hollow body comprises wall bores (32) and presents recesses for fixing means.

15. Vehicle wheel with tyre according to any of claims 1 to 11, characterized in that the cross-section of the emergency running support is T-shaped.

16. Vehicle wheel with tyre according to any of preceding claims, characterized in that a wheel rim and an emergency running support forms a component.

17. Vehicle wheel with tyre according tot any of preceding claims, characterized in that the emergency running support can be further mounted in rims with grooved base.

18. Vehicle wheel with tyre according to any of preceding claims, characterized in that the wheel rim and the emergency running support form an integral wheel rim body.

19. Vehicle wheel with tyre according to any of claims 1 to 18, characterized in that the slant $(\alpha)$ of the rim shoulder (4) is between 4° and 16°.

20. Vehicle wheel with tyre according to any of preceding claims, characterized in that use may be made of wheel rims having rim shoulders (4) standardized or made according to claim 19, and standardized rim beads, and tyres with corresponding beads which can be mounted therein, and in that the tyre beads (12) present a slant $(\beta)$ for which the mid-perpendicular line raised from a point (42) of the tyre bead is slanted by about 0 to 60° with respect to the line (44) parallel to the axle.

21. Vehicle wheel with tyre according to any of claims 1 to 20, characterized in that the bearing surface (17) of the emergency running support is concavely-curved.

22. Vehicle wheel with tyre according to any of claims 1 to 21, characterized in that the emergency running support is provided, in the area of the bearing surface (17), with a highfriction material.

23. Vehicle wheel with tyre according to any of claims 1 to 22, characterized in that the rim shoulder presents a known emergency edge (hump 8).

24. Vehicle wheel with tyre according to any of claims 1 to 21 and 23, characterized in that the emergency running support is provided, in the area of the bearing surface, with a reduced-friction material.

25. Vehicle wheel with tyre according to any of claims 1 to 21, 23 and 24, the contact surface of which for emergency running is provided with a lubrificating material, characterized by use of at least a lubrificating material recipient in or on the emergency running bearing surface.

26. Vehicle wheel with tyre according to any of the preceding claims, characterized in that the rim shoulder (4) is provided with a safety groove (61) is known per se, and said tyre is provided with a thereto corresponding bead toe.

27. Vehicle wheel with tyre according to any of the preceding claims, with a narrow grooved base, characterized in that the emergency running support (65) is axially widened, and the bearing surface ($B_M$) can be widened by additional elements (67).

28. Vehicle wheel with tyre according to one of the preceding claims, characterized in that the wheel rim (3) has rim shoulders (4) with different rim diameters (DF) and in that the tyre comprises a correspondingly adapted tyre bead.

**Revendications**

1. Roue (1) de véhicule avec pneumatique, constituée d'une jante (3) non divisible, équipée d'un anneau de secours (16), et d'un pneumatique (10), dans laquelle le pneumatique comporte une carcasse (11), en particulier une carcasse radiale, pourvue de deux talons de pneu (12) disposés latéralement à distance l'un de l'autre et comportant des tringles de talon (13) résistant à la traction, de flancs qui sont contigus aux talons et d'une bande de roulement (15), en particulier d'une bande de roulement renforcée par une ceinture, et dans laquelle la jante de roue (3) présente deux épaulements (4) disposés latéralement à distance l'un de l'autre et conformés axialement de manière inclinée vers l'intérieur, ces épaulements étant reliés par une base de jante (6) évidée radialement et se transformant, axialement vers l'extérieur, chacun en un bourrelet de jante (5), l'anneau de secours (16) présentant à sa surface d'appui (17) une largeur ($B_M$) qui correspond au moins à la largeur ($B_T$) de la base de jante (6), l'anneau de secours (16), dont le diamètre extérieur (DM) est plus grand que la somme du diamètre du bourrelet de jante ($D_{FH}$) et de l'épaisseur (d) doublée du flanc (14) du pneumatique, étant relié dans la base de jante (6), avec cette dernière, par un élément servant de pied (18), cet élément présentant une paroi (20) ayant un contour par lequel un espace annulaire (2) est formé avec la base de jante, la paroi (20) présentant une surface toroïdale (19) qui forme, avec l'épaulement de jante (4) et avec le bourrelet de jante (5), un passage (7) ayant un endroit étroit, dont la largeur intérieure ($B_F$) est de 1,1 à 2 fois l'épaisseur du talon de pneu ($B_B$), caractérisée en ce que l'espace annulaire (2) s'élargit jusqu'à la base de jante (6), axialement et vers l'intérieur, jusqu'à une largeur ($B_R$) de 1,5 fois l'épaisseur du talon de pneu ($B_B$) et en ce que l'évidement ($H_T$) de la base de jante (6) mesuré par rapport à l'épaulement (4) de jante correspond à une hauteur qui est comprise entre 0,3 et 1 fois la hauteur standard de la base et au maximum à la hauteur ($H_F$) du bourrelet de jante (5).

2. Roue de véhicule avec pneumatique suivant la revendication 1, caractérisée en ce que la surface radialement interne (19) est formée en un endroit déterminé, quoique sélectionnable, du contour interne (20), qui est un point (29) d'une courbe (23, 24) qui passe parallèlement à une ligne imaginaire (21, 22) entre le bord interne (26) de l'épaulement de jante (4) et le bourrelet de jante (5) et qui passe radialement, parallèlement plus haut qu'une ligne imaginaire (22) correspondant au contour extérieur du pneumatique.

3. Roue de véhicule avec pneumatique suivant l'une des revendications 1 et 2, caractérisée en ce que la surface radialement interne (19) et l'espace annulaire (2) se situent des deux côtés de l'anneau de secours.

4. Roue de véhicule avec pneumatique suivant l'une des revendications 1 à 3, caractérisée en ce que la surface radialement interne (19) consiste en une surface à contour rectiligne.

5. Roue de véhicule avec pneumatique suivant l'une des revendications 1 à 3, caractérisée en ce que la surface radialement interne (19) a une forme conique.

6. Roue de véhicule avec pneumatique suivant l'une des revendications 1 à 3, caractérisée en ce que la surface radialement interne (19) consiste en une surface à contour arqué.

7. Roue de véhicule avec pneumatique suivant l'une des revendications 1 à 6, caractérisée en ce que la surface radialement interne est une partie du bord latéral (39, 49) de l'anneau de secours.

8. Roue de véhicule avec pneumatique suivant l'une des revendications 1 à 7, caractérisée en ce que l'espace annulaire (2) présente, vu en coupe transversale, la forme d'un talon de pneumatique.

9. Roue de véhicule avec pneumatique suivant l'une des revendications 1 à 8, caractérisée en ce que la base de jante évidée et l'anneau de secours adjoint sont situés symétriquement.

10. Roue de véhicule avec pneumatique suivant l'une des revendications 1 à 8, caractérisée en ce que la base de jante évidée et l'anneau de secours adjoint sont situés asymétriquement.

11. Roue de véhicule avec pneumatique suivant l'une des revendications 1 à 10, caractérisée en ce que la largeur de la surface d'appui ($B_M$) s'élève jusqu'à 1,5 fois la largeur ($B_T$) de la base évidée (6).

12. Roue de véhicule avec pneumatique suivant l'une des revendications précédentes, caractérisée en ce que la section transversale de l'anneau de secours a une forme de champignon.

13. Roue de véhicule avec pneumatique suivant l'une des revendications précédentes, caractérisée en ce que l'anneau de secours est réalisé en forme de corps creux.

14. Roue de véhicule avec pneumatique suivant l'une des revendications précédentes, caractérisée en ce que le corps creux est pourvu de perçages de paroi (32) et présente des évidements pour un moyen de fixation.

15. Roue de véhicule avec pneumatique suivant l'une des revendications 1 à 11, caractérisée en ce que la section transversale de l'anneau de secours a une forme en T.

16. Roue de véhicule avec pneumatique suivant l'une des revendications précédentes, caractérisée en ce qu'une jante de roue et un anneau de secours forment une unité constitutive.

17. Roue de véhicule avec pneumatique suivant l'une des revendications précédentes, caractérisée en ce que l'anneau de secours peut être installé ultérieurement dans des jantes à base évidée.

18. Roue de véhicule avec pneumatique suivant l'une des revendications précédentes, caractérisée en ce que la jante de roue et l'anneau de secours forment un corps de jante de roue d'une pièce.

19. Roue de véhicule avec pneumatique suivant l'une des revendications 1 à 18, caractérisée en ce que l'inclinaison ($\alpha$) de l'épaulement de jante (4) se situe dans la gamme allant de 4° à 16°.

20. Roue de véhicule avec pneumatique suivant l'une des revendications précédentes, caractérisée en ce que l'on peut utiliser des jantes de roue ayant des épaulements de jante (4) normalisés ou réalisés suivant la revendication 19 et des bourrelets de jante normalisés et des pneumatiques, à talons correspondants, qui peuvent y être montés et en ce que les talons de pneumatique (12) présentent une inclinaison pour laquelle la médiatrice (43), élevée a partir d'un point (42) du talon du pneumatique, est inclinée de l'ordre de 0° a 60° par rapport à la parallèle (44) de l'axe.

21. Roue de véhicule avec pneumatique suivant l'une des revendications 1 à 20, caractérisée en ce que la surface d'appui (17) de l'anneau de secours est cintrée de manière concave.

22. Roue de véhicule avec pneumatique suivant l'une des revendications 1 à 21, caractérisée en ce que l'anneau de sécurité est pourvu, dans la zone de la surface d'appui (17), d'un matériau produisant un frottement élevé.

23. Roue de véhicule avec pneumatique suivant l'une des revendications 1 à 22, caractérisée en ce que l'épaulement de jante présente un bord de sécurité connu ("hump" ou bosse 8).

24. Roue de véhicule avec pneumatique suivant l'une des revendications 1 à 21 et 23, caractérisée en ce que l'anneau de sécurité est pourvu, dans la zone de la surface d'appui, d'un matériau produisant un frottement réduit.

25. Roue de véhicule avec pneumatique suivant l'une des revendications 1 à 21, 23 et 24 dont la surface de contact de roulement de secours est pourvue d'une matière lubrifiante, caractérisée pat utilisation d'au moins un réservoir pour la matière lubrifiante dans ou sur l'appui de roulement de secours.

26. Roue de véhicule avec pneumatique suivant l'une des revendications précédentes, caractérisée en ce que l'épaulement de jante (4) comporte une rainure de sécurité (61) connue en soi et le pneumatique comporte un bourrelet correspondant.

27. Roue de véhicule avec pneumatique suivant l'une des revendications précédentes, avec une base évidée étroite, caractérisée en ce que l'anneau de sécurite (65) est axialement formé de façon élargie, la surface d'appui ($B_M$) pouvant être élargie par des éléments (67) complémentaires.

28. Roue de véhicule avec pneumatique suivant l'une des revendications précédentes, caractérisée en ce que la jante de roue (3) présente des épaulements de jante (4) avec des diamètres de jante (DF) différents et en ce que le pneumatique présente un talon de pneu adapté de manière correspondante.

Fig. 1

Fig. 2

Fig. 3

Fig. 4

Fig. 5

Fig. 6

Fig. 7

Fig. 8

Fig. 9

Fig. 10